# EUROPEAN PATENT SPECIFICATION

(11) **EP 0 857 420 B1**
(45) Date of publication and mention of the grant of the patent: **09.05.2001**
(21) Application number: 98100575.4
(22) Date of filing: 15.01.1998
(51) Int. Cl.: A01K 63/04

(54) **An electric aquarium pump with filtering unit**
Elektrische Aquariumpumpe mit Filtereinheit
Pompe électrique pour aquarium avec unité filtrante

(30) Priority: 15.01.1997 IT VE970001
(43) Date of publication of application: 12.08.1998
(73) Proprietor: HYDOR S.r.l., I-36061 Bassano del Grappa (VI) (IT)
(72) Inventor: Bresolin, Valerio, 36020 - Pove Del Grappa (IT)
(74) Representative: Piovesana, Paolo

(56) References cited:
- DE-A- 3 152 631
- DE-U- 9 319 586
- GB-A- 2 249 135

## Description

This invention relates to an electric aquarium pump provided with a filtering unit.

Electric pumps for aquariums are well known. They generally comprise a pump casing housing a synchronous electric motor, with the rotor of which there rigidity rotates a bladed impeller which draws water through a substantially axial aperture to urge it by centrifugal effect through a peripheral delivery aperture.

To regulate the pump throughput, a valve of adjustable opening is provided on the suction aperture. In addition, a filtering unit is provided in front of the suction aperture to retain impurities.

These known electric pumps suffer however from certain drawbacks, and in particular:
- the filtering unit is laborious to clean or replace because it often requires the pump to be removed from the aquarium or at least to be detached from its walls. This laboriousness is accentuated by the fact that the tendency is to locate such pumps in a hidden position for aesthetic reasons;
- discontinuous throughput regulation:

- poor filtering reliability due to the fact that often the filtering sponge is influenced by the pump suction effect and consequently deforms to block the impeller.

An object of the invention is to overcome all these drawbacks by providing an electric pump comprising a filtering unit, in which the filtering unit can be quickly and easily cleaned or replaced.

A further object of the invention is to provide an electric pump which enables this replacement to be effected while leaving the pump immersed in the water and using only the feel of the hands.

These and further objects which will be apparent from the ensuing description are attained according to the invention by an electric aquarium pump provided with a filtering unit, in accordance with claim 1.

A preferred embodiment of the invention is described in detail hereinafter by way of non-limiting example with reference to the accompanying drawings, on which:
Figure 1 is an electric pump provided with two filtering units according to the invention,
Figure 2 is a perspective view of a filtering unit.
Figure 3 is a longitudinal section through an electric pump of the invention provided with a single filtering unit.
Figure 4 shows the pump casing cover seen from the interior
Figure 5 shows the delivery nozzle from below, and
Figure 6 shows the filtering unit from below.

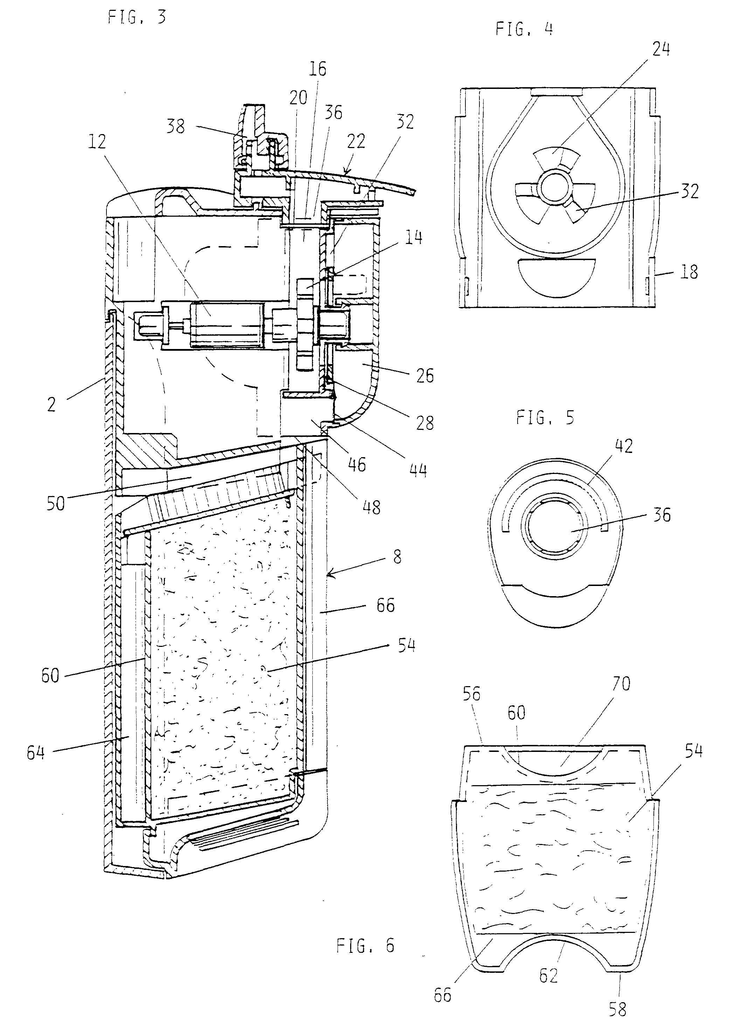

As can be seen from the figures, the electric pump provided with a filtering unit according to the invention comprises substantially a baseplate 2 provided with slightly outwardly flared lateral fins for snap-fitting a pump casing 6 and an underlying filtering unit indicated overall by 8 (see Figure 3), and provided on its rear with suckers 10 for its fixing to the inner walls of the aquarium.

The pump casing 6 sealedly houses a motor comprising a stator, between the pole pieces of which there is positioned a rotor 12 rotationally rigid with a bladed impeller 14.

The impeller 14 is housed within a cylindrical chamber 16 formed on a cover 18 snap-engageable with the pump casing and provided upperly with a discharge aperture 20, facing which there is a flat delivery nozzle 22.

The cover 18 is substantially of U-shape. and in its central portion comprises three equi-angled apertures 24 which connect the chamber 16 housing the impeller to a further chamber 26.

Inside said chamber 26. facing said apertures there is provided a shutter, indicated overall by 28, consisting of a disc 30 provided with three equi-angled radial apertures 32 of shape and dimensions corresponding substantially to the apertures 24 of the cover 18.

The disc 30 can be rotated, by operating appendices 34, between two end positions, in one of which the radial apertures 32 face the radial apertures 24 of the cover (maximum suction) and in the other of which the solid parts of the disc 30 face the radial apertures 24, to completely close them (zero suction).

In the discharge aperture 20 there is inserted a bush 36 rigid with the delivery nozzle 22, which is provided upperly with a Venturi tube 38 on which an air intake tube 40 engages.

The nozzle is rotatable axially relative to the pump casing through an arc of 180° and is limited in this excursion by an appendix (not shown on the drawings) engaging in a corresponding seat 42 provided in its lower outer surface.

The chamber 26 is provided lowerly with an aperture 44 for communication with a further chamber 46, external to the chamber 16 housing the impeller 14, the chamber 46 comprising in its base an aperture 48 which connects it to a chamber 50 formed by the upper surface of the filtering unit 8 and the lower surface of the pump casing.

The filtering unit 8 comprises a substantially prismatic internally hollow shell provided with a removable cover 52 for the insertion and removal of a parallelepiped filtering sponge 54.

Said prismatic shell is closed lowerly, its inner surface 56, ie that facing the baseplate, and its front surface 58 comprising a longitudinal groove 60,62 respectively such that:
- the groove 60 forms with the surface of the baseplate 2 a channel 64,
- the external groove 62 defines within the shell, when the parallelepiped sponge is present, two longitudinal channels 66 communicating with the chamber 50 via two holes 68.

A further passage hole 70 is provided in the filtering unit in correspondence with the groove 60.

The electric pump also provides for the use of a further prefilter 72 to be also snap-fitted onto the baseplate 2 and positioned substantially inclined to the horizontal so that it can be easily cleaned externally even if the unit is positioned on the base of the aquarium.

The electric pump of the invention is used as follows:
the baseplate 2. with the pump casing 6, the filtering unit 8 and the prefilter 72 fitted to it, is secured to the chosen position within the aquarium by the suckers 10. During this operation care must be taken that the discharge of the nozzle 22 is positioned below the water surface and that the upper end of the air intake tube 40 is located above the water surface.

The nozzle 22 is then rotated to orientate the water jet in the desired direction.

When the motor is powered, the rotor 12 begins to rotate and rotates the impeller 14. In this manner the water contained in the chamber 16 is urged by centrifugal effect to leave through the discharge aperture 20 and the delivery nozzle 22. At the same time the water draws air from the outside via the Venturi tube. to increase its oxygen concentration. Simultaneously, further water is drawn by suction into the filtering unit 8 to provide the required recycling. The water drawn in by suction passes through the slots 74 of the lower prefiiter 72, rises along the channel 64 formed by the filtering unit 8 and the baseplate 2, passes through the aperture 70 provided in the filtering unit, passes through the filtering sponge 54, rises along the longitudinal conduits 66, fills the chamber 50, passes through the apertures 48 and 44. fills the chamber 26 and then via the apertures 24, 32 enters the chamber 16 housing the impeller.

As stated, the throughput is regulated by rotating the shutter 30 so that its apertures 32 face the apertures 24 to a greater or lesser extent.

When the filtering unit needs to be replaced, it is necessary merely to disengage it from the baseplate by gripping it with one hand, then fit the new filtering unit.

If the filtering unit has merely to be cleaned, the unit is disengaged from the baseplate, the cover 52 is removed and the sponge is extracted from the shell for cleaning.

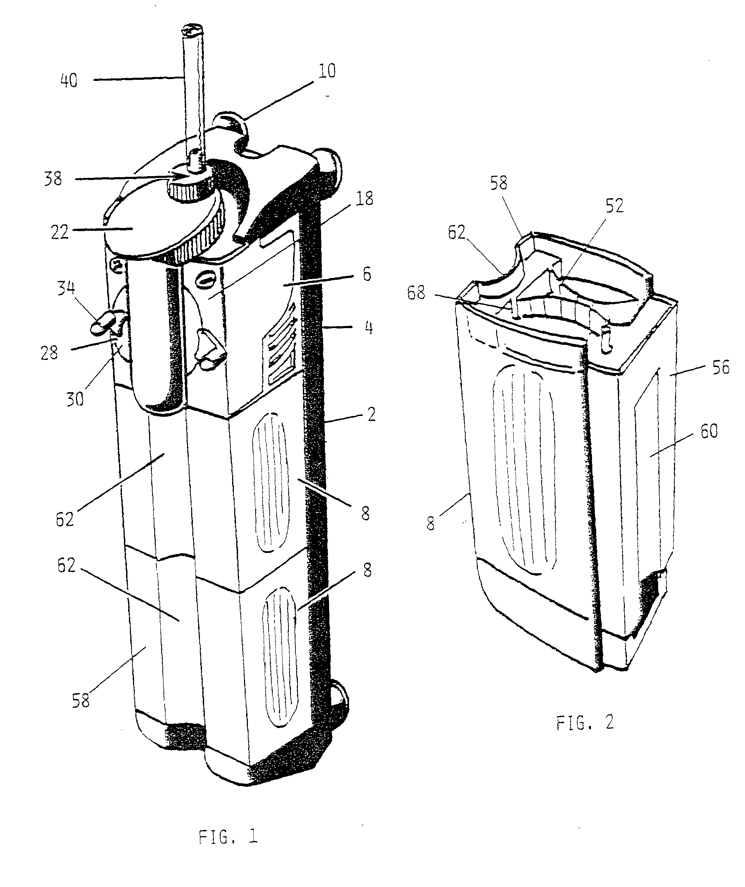

The aforedescribed operation relates to a pump provided with a single filtering unit. Figure 1 shows a pump with two identical filtering units, in which case the water leaving through the aperture 66 of the lower filtering unit fills the chamber formed by the base of the upper filtering unit and the cover 52 of the underlying filtering unit, then rises along the channel 64 formed by the upper surface of this filtering unit and the surface of the baseplate.

From the aforegoing it is apparent that the electric pump of the invention presents numeous advantages, and in particular:
- it enables the filter to be cleaned or replaced with extreme ease by virtue of its snap-engagement with the baseplate,
- it enable the water throughput to be continuously regulated by virtue of the shutter device.
- it enables a water stream to be produced corresponding to that found in a natural fish environment, by virtue of the facility for orientating the nozzle,
- it enables the rotor to be easily and comfortably cleaned by disegaging the U-shaped cover from the pump casing,
- it is of low constructional cost because it need comprise only a single pump casing and single filtering unit, the baseplate being made of any length depending on the filtering units to be supported.

## Claims

1. An electric aquarium pump with filtering unit. comprising a baseplate (2) provided with suckers (10) for its securing to the vertical walls of the aquarium, said baseplate being provided with lateral fins (4) for snap-fitting a pump (6) and at least one underlying filtering unit (8), which on that side facing the baseplate comprises a vertical groove (62) for water circulation.

2. An electric pump as claimed in claim 1. characterised in that the lateral fins (4) are slightly flared outwards.

3. An electric pump as claimed in claim 1, characterised in that the pump comprises a pump casing (6) housing the motor with the rotor (12), and a removable cover (18) which snap-fits into said casing to form the chamber (16) housing the impeller (14)

4. An electric pump as claimed in claim 3, characterised in that said chamber (16) is provided upperly with a discharge aperture (20) in which a flat delivery nozzle (22) engages.

5. An electric pump as claimed in claim 3. characterised in that said removable cover (18) is provided with a shutter (30) of adjustable opening.

6. An electric pump as claimed in claim 3, characterised in that a Venturi tube (38) is applied to the delivery nozzle (22) for water oxygenation

7. An electric pump as claimed in claim 4, characterised in that the nozzle (22) is axially rotatable relative to the pump casing (6).

8. An electric pump as claimed in claim 1, characterised in that each filtering unit (8) comprises a substantially prismatic shell which internally houses a filtering sponge (54) and is provided with a removable cover (52).

9. An electric pump as claimed in claim 8, characterised in that said prismatic shell is closed lowerly, its inner surface (65) and front surface (58) comprising corresponding longitudinal grooves (60,62).

10. An electric pump as claimed in claim 1, characterised by comprising a prefilter unit (72) snap-engageable with the baseplate

11. An electric pump as claimed in claim 1. characterised by comprising two or more identical filtering units.

## Patentansprüche

1. Elektrische Pumpe für Aquarien mit Filtereinheit, die eine Grundplatte (2) mit Saugnäpfen (10) zur Befestigung an der senkrechten Wand des Aquariums aufweist, wobei die Grundplatte mit seitlichen Rippen (4) zum Einrasten einer Pumpe (6) und mit wenigstens einer tiefer liegenden Filtereinheit (8) versehen, die auf der der Grundplatte zugewandten Seite eine senkrechte Rille (62) für die Wasserzirkulation aufweist.

2. Elektrische Pumpe nach Anspruch 1, dadurch gekennzeichnet, dass die seitlichen Rippen (4) leicht nach außen ausgestellt sind.

3. Elektrische Pumpe nach Anspruch 1, dadurch gekennzeichnet, dass die Pumpe ein Pumpengehäuse (6) zur Aufnahme des Motors mit dem Rotor (12) und eine abnehmbare Abdeckung (18) aufweist, die in das Gehäuse einrastet, wodurch eine Kammer (16) zur Aufnahme des Flügelrades (14) gebildet wird.

4. Elektrische Pumpe nach Anspruch 3, dadurch gekennzeichnet, dass oben an der Kammer (16) eine Abflussöffnung (20) vorgesehen ist, in die eine flache Ausflussdüse (22) eingesetzt ist.

5. Elektrische Pumpe nach Anspruch 3, dadurch gekennzeichnet, dass die abnehmbaren Abdeckung (18) mit einem Verschluss (30) mit einer einstellbaren Öffnung versehen ist.

6. Elektrische Pumpe nach Anspruch 3, dadurch gekennzeichnet, dass zur Wasseroxidation an der Ausflussdüse (22) ein Venturirohr angeordnet ist.

7. Elektrische Pumpe nach Anspruch 4, dadurch gekennzeichnet, dass die Düse (22) relativ zu dem Pumpengehäuse (6) in axialer Richtung drehbar ist.

8. Elektrische Pumpe nach Anspruch 1, dadurch gekennzeichnet, dass jede Filtereinheit (8) eine im wesentlichen prismaförmige Hülle aufweist, in der ein Filterschwamm (54) aufgenommen ist und die mit einer abnehmbaren Abdeckung (52) versehen ist.

9. Elektrische Pumpe nach Anspruch 8, dadurch gekennzeichnet, dass die prismaförmige Hülle im unteren Bereich geschlossen ist und ihre innere Oberfläche (65) und ihre vordere Oberfläche (58) entsprechende Rillen (60, 62) in Längsrichtung aufweisen.

10. Elektrische Pumpe nach Anspruch 1, dadurch gekennzeichnet, dass sie eine Vorfiltereinheit (72) aufweist, die in die Grundplatte einrastbar ist.

11. Elektrische Pumpe nach Anspruch 1, dadurch gekennzeichnet, dass sie zwei oder mehr identische Filtereinheiten aufweist.

## Revendications

1. Une pompe électrique d'aquarium avec une unité de filtration, comprenant une plaque de base (2) avec des ventouses (10) de fixation sur les parois verticales de l'aquarium, ladite plaque de base comprenant des pattes latérales (4) pour le montage par encliquetage d'une pompe (6) et d'au moins une unité de filtration sous-jacente (8) qui, sur le côté tourné vers la plaque de base, comprend une rainure verticale (62) pour la circulation d'eau.

2. Une pompe électrique comme revendiquée en revendication 1, caractérisée en ce que les pattes latérales sont légèrement évasées vers l'extérieur.

3. Une pompe électrique comme revendiquée en revendication 1, caractérisée en ce que la pompe comprend un boîtier de pompe (6) contenant le moteur avec le rotor (12), et un couvercle amovible (18) qui se monte par encliquetage dans le boîtier pour former la chambre (16) contenant la roue à palettes (14).

4. Une pompe électrique comme revendiquée en revendication 3, caractérisée en ce que ladite chambre comporte vers le haut une ouverture de sortie (20) dans laquelle est engagée une buse de sortie plate (22).

5. Une pompe électrique comme revendiquée en revendication 3, caractérisée en ce que ledit couvercle amovible (18) comporte un obturateur (30) à ouverture variable.

6. Une pompe électrique comme revendiquée en revendication 3, caractérisée en ce qu'un tube de Venturi (38) est appliqué à la buse de sortie (22) pour l'oxygénation de l'eau.

7. Une pompe électrique comme revendiquée en revendication 4, caractérisée en ce que la buse (22) est rotative axialement par rapport au boîtier de pompe (6).

8. Une pompe électrique comme revendiquée en revendication 1, caractérisée en ce que chaque unité de filtration (8) comprend une boîte sensiblement prismatique qui contient intérieurement une éponge de filtration (54) et qui est équipée d'un couvercle amovible (52).

9. Une pompe électrique comme revendiquée en revendication 8, caractérisée en ce que ladite boîte prismatique est fermée dans le bas, sa surface interne (65) et sa surface avant (58) comprenant des rainures longitudinales correspondantes (60, 62).

10. Une pompe électrique comme revendiquée en revendication 1, caractérisée en ce qu'elle comprend une unité de pré-filtration (72) montable par encliquetage sur la plaque de base.

11. Une pompe électrique comme revendiquée en revendication 1, caractérisée en ce qu'elle comprend deux ou plus de deux unités de filtration identiques.
